# EUROPÄISCHE PATENTSCHRIFT

(11) **EP 2 962 017 B1**
(45) Veröffentlichungstag und Bekanntmachung des Hinweises auf die Patenterteilung: **12.04.2017**
(21) Anmeldenummer: 14709876.8
(22) Anmeldetag: 25.02.2014
(51) Int. Cl.: F16J 15/06, F16J 15/12, F16L 23/18

(54) **FLACHDICHTUNG FÜR FLANSCHVERBINDUNGEN**
FLAT SEALING FOR FLANGE CONNECTIONS
JOINT PLAT POUR RACCORDS À BRIDES

(30) Priorität: 28.02.2013 DE 102013003401
(43) Veröffentlichungstag der Anmeldung: 06.01.2016
(73) Patentinhaber: Klinger AG, 6300 Zug (CH)
(72) Erfinder: GUGGER, Alfred, 65520 Bad Camberg-Würges (DE); WEIMER, Norbert, 35606 Solms (DE)
(74) Vertreter: Henseler, Daniela
(86) Internationale Anmeldenummer: PCT/EP2014/000492
(87) Internationale Veröffentlichungsnummer: WO 2014/131510

(56) Entgegenhaltungen:
- DE-A1- 19 532 974
- DE-B- 1 099 552
- GB-A- 277 806
- US-A- 2 473 102
- US-A- 2 768 036
- US-A- 3 433 541
- US-A- 3 612 550
- US-A- 4 979 755
- US-A1- 2004 046 390
- US-A1- 2005 212 296
- US-A1- 2012 306 161

## Beschreibung

Die Erfindung betrifft eine Flachdichtung für Flanschverbindungen zum Abdichten von Flanschen für den Behälter- und Rohrleitungsbau nach dem Oberbegriff des Anspruchs 1.

Aus US 2004/0046390 A1, US2005/0212296 A1 und US 2,473,102 A sind gattungsgemäße Flachdichtungen für Flanschverbindungen bekannt.

Flachdichtungen werden als ringförmige Dichtelemente zwischen zwei Flanschen mit vorzugsweise ebenen Dichtflächen eingebaut, um Flanschverbindungen für den Behälter- und Rohrleitungsbau auszubilden. Dabei bieten sich Flachdichtungen an, die die Weichheit von Gummi haben, aber die Schrauben- und Rohrkräfte durch metallische Stützen aufnehmen. Derartige Gummi-Stahl-Dichtungen mit dem Dichtungswerkstoff Gummi im Kraftnebenschluss werden vielfach verwendet. Der Kraftnebenschluss bietet darüber hinaus die Möglichkeit, den Dichtungswerkstoff sehr viel höher als im Krafthauptschluss zu beanspruchen, da sich höhere Innendrücke beim Kraftnebenschluss als Druckbeanspruchung auf den Dichtungswerkstoff auswirken, während diese beim Krafthauptschluss zu Zugbeanspruchungen führen. Da viele Dichtungswerkstoffe sehr viel höhere Belastungsgrenzen bei Druck- als bei Zugbeanspruchung zeigen, kann sich daraus ein deutlich größerer Druckeinsatzbereich für Dichtungen im Kraftnebenschluss ergeben.

Eine derartige Kraftnebenschlussdichtung zur Abdichtung von Flansch- bzw. Rohrleitungsverbindungen ist bekannt aus DE 197 58 563 A1.

Bei großen Flanschverbindungen, z.B. im Anlagenbau oder großen Rohrabmessungen bei Wasserversorgungen, sind diese Flachdichtungen mit einer Kombination aus Metallring, der die Flanschkräfte aufnimmt, und eines Dichtelementes aus Gummi, das die Dichtfunktion übernimmt, daher besonders im Einsatz. Bei großen Nennweiten werden die Innendruckkräfte schon bei geringen Drücken enorm groß, so dass hohe Schraubkräfte notwendig sind, um die Flansche der Verbindungen zu halten. Damit diese hohen Kräfte das Dichtelement aus Gummi nicht zerstören, ist es wie vorstehend ausgeführt im Kraftnebenschluss angeordnet.

Die Fertigung der Flachdichtungen in den großen Abmessungen, beispielsweise Durchmesser von 3 m oder 4 m, ist recht aufwändig und teuer. Es werden große Drehbänke benötigt, da üblicherweise auf der Innenseite des verwendeten Metallringes ein Absatz abgedreht wird, auf den das Gummielement aufgeschoben wird. Der Transport der Flachdichtung in den großen Abmessungen ist ebenfalls aufwändig und teuer.

Aus DE 201 06 824 U1 und GB 2 455 320 A sind gekammerte Flachdichtungen bekannt. Aus DE 20 2011 104 825 U1 ist eine Dichtungsanordnung mit einem mehrteiligen Stützring bekannt.

Aufgabe der Erfindung ist es daher, eine Flachdichtung zu schaffen, die aus einzelnen Teilen zu einer fertigen Flachdichtung zusammenfügbar ist.

Diese Aufgabe wird durch die Merkmale des Anspruchs 1 gelöst.

Hierdurch wird eine Flachdichtung geschaffen, deren Stützring segmentiert ist. Die Stützringsegmente sind dabei durch stoßseitige, formkraftschlüssige Verbindungen zu einem geschlossenen Ring zusammensteckbar. Die Gefahr eines wieder voneinander Lösens der zusammengesteckten Stützringsegmente, insbesondere beim Einbau einer solchen Flachdichtung, wird unterbunden durch die anhaftende Anbindung der Einfassung. Dies gilt insbesondere für die bevorzugte Ausführung, dass die Einfassung ein einstückig ausgebildeter Dichtring ist.

Die anhaftende Einfassung überträgt als geschlossener Dichtring Haltekräfte auf die Gesamtheit der Stützringsegmente, so dass deren Aneinanderreihung neben einzelnen kraftformschlüssigen Verbindungen durch ein gemeinsames Verbindungselement gesichert wird. Aufgrund ihrer kreisrunden Form kann die Einfassung axial und radial Zugkräfte auf die Stützringsegmente ausüben und diese dazu zuverlässig zusammenhalten. Dies gilt in gleicher Weise bei einer Anordnung der Einfassung als innere und/oder äußere Einfassung des Stützrings.

Die Segmentierung des Stützrings vereinfacht dessen Fertigung, so dass die Flachdichtung kostengünstiger und schneller hergestellt werden kann. Eine kleinere Packmasse ist die Folge, die einen einfacheren und günstigeren Versand erlaubt. Auch die Montage ist einfach, der der Zusammenbau ohne Werkzeug möglich sein kann. Dies gilt insbesondere dann, wenn die kraftformschlüssige Verbindung durch zusammensteckbare Fügeelemente erfolgt. Dazu können Verbindungsnoppen vorgesehen sein, die in entsprechende Ausschnitte eingreifen. Noppen für die Anbindung der Einfassung können in gleicher Weise ausgebildet sein wie die Verbindungsnoppen. Ein gleichmäßiges Anbinden eines Stützringsegments an mehreren Seiten ist dadurch ausbildbar.

Die Flachdichtung kann in allen Abmessungen und in wählbaren Werkstoffen hergestellt werden.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.
Fig. 1 zeigt schematisch eine Draufsicht einer Flachdichtung,
Fig. 2 zeigt schematisch einen Schnitt A-A der Flachdichtung gemäß Fig. 1,
Fig. 3 zeigt schematisch eine perspektivische Ansicht der Flachdichtung gemäß Fig. 1.

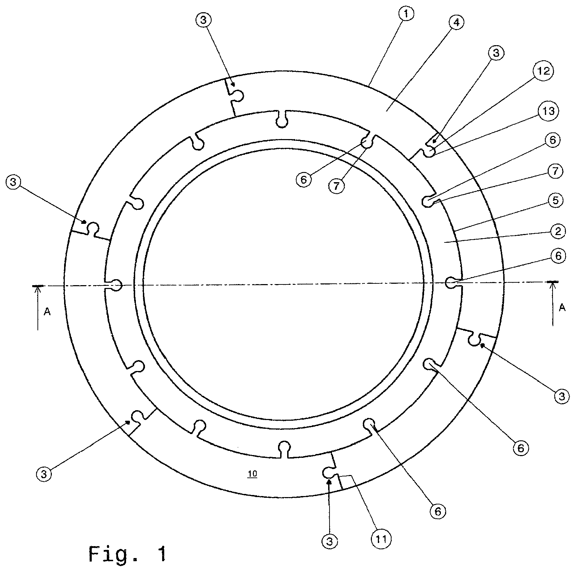

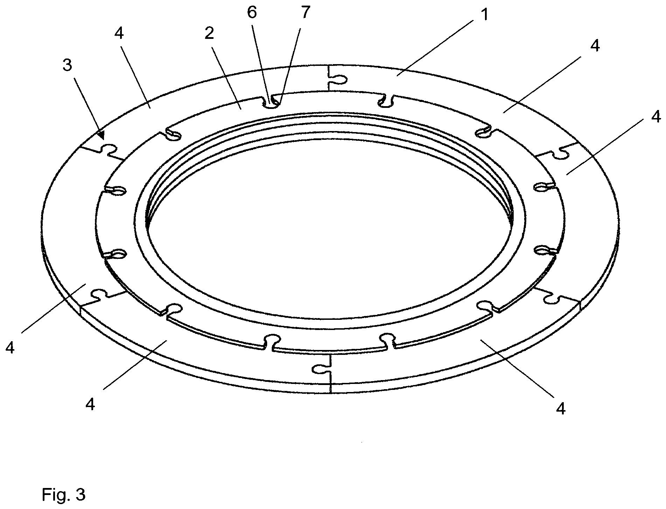

Fig. 1 bis Fig. 3 zeigen eine Flachdichtung für eine Flanschverbindung für den Behälter- und Rohrleitungsbau. Die Flachdichtung umfasst einen zur Aufnahme von Flanschkräften vorgesehenen Stützring 1 mit einer inneren und/oder äußeren Einfassung 2 aus einem elastischen Werkstoff als Dichtelement für einen Kraftnebenschluss in der Flanschverbindung. Die Einfassung 2 ist hier innenseitig des Stützrings 1 angeordnet.

Gemäß alternativer, hier nicht dargestellter Ausführungsbeispiele kann die Einfassung 2 auch als eine äußere Einfassung am Stützring 1 angeordnet sein. Dies ist insbesondere dann der Fall, wenn gegenüber einem Unterdruck abzudichten ist. Weiterhin kann die Einfassung 2 innen und außen des Stützrings 1 angeordnet sein, beispielsweise bei wechselnden Druckverhältnissen.

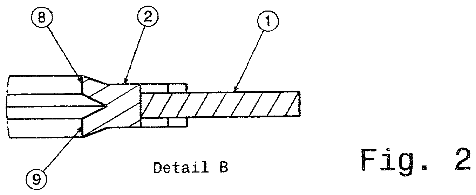

Gemäß dem in Fig. 1 und Fig. 2 dargestellten Ausführungsbeispiel ist der Stützring 1 ein äußerer Ring, an dem die innenliegende Einfassung angebunden ist. Der Stützring 1 ist segmentiert und durch stoßseitige, kraftformschlüssige Verbindungen 3 geschlossen. Durch die Segmentierung umfasst der Stützring 1 eine Anzahl Stützringsegmente 4, die über die Verbindungen 3 zusammengesteckt sind. Da der Stützring 1 rund ist, besitzen die Stützringsegmente 4 eine Kreisbogengestalt.

Die der Einfassung 2 zugewandten Kreisbogenflächen 5 der Stützringsegmente 4 tragen radial vorstehende Noppen 6 für eine anhaftende Anbindung der entsprechende Ausschnitte 7 aufweisenden Einfassung 2. Die Einfassung 2 ist dabei vorzugsweise ein einstückig ausgebildeter Dichtring, wie in Fig. 1 dargestellt.

Wie Fig. 2 zeigt, kann die Einfassung 2 als Dichtelement in bekannter Weise etwas dicker ausgebildet sein als der Stützring 1 und kann mit nach innen gerichteten Dichtlippen 8, 9 ausgebildet sein.

Die Stützringsegmente 4 können beispielsweise über Wasserstrahlschneiden oder andere metallschneidende Verfahren aus Blechen oder anderem Flächenmaterial mit wählbaren Dicken ausgeschnitten werden. Die Stützringsegmente 4 werden zudem stirn- bzw. stoßseitig mit Fügeelementen zur Ausbildung der kraftformschlüssigen Verbindung 3 versehen, die ein Zusammenstecken der einzelnen Stützringsegmente 4 zu einem Stützring 1 ermöglichen.

Die kraftformschlüssige Verbindung 3 der Stützringsegmente 4 ist dabei vorzugsweise bündig zu einer Ober- und Unterseite 10 des Stützrings 1 zusammensteckbar. Ferner ist die kraftformschlüssige Verbindung der Stützringsegmente 4 vorzugsweise zentrisch an Stirnflächen 11 der Stützringsegmente 4 ausgebildet.

Die kraftformschlüssigen Verbindungen 3 der Stützringsegmente 4 erfolgen vorzugsweise über jeweils eine kugel-, knopf- oder pilzförmige Verbindungsnoppe 12 des einen der Fügepartner und einen entsprechenden Ausschnitt 13 mit Hinterschnitt des jeweils anderen Fügepartners. Jedes Stützringsegment 4 weist vorzugsweise an jeder Stirnfläche 11 mindestens einen der vorstehend genannten Fügepartner auf, von denen einer eine positive und der andere eine negative Form besitzt.

Die Noppen 6 für die Anbindung der Einfassung 2 aus einem elastischen Werkstoff sind vorzugsweise entsprechend der Verbindungsnoppen 12 der kraftschlüssigen Verbindung 3 der Stützringsegmente 4 ausgebildet.

Die Stützringsegmente 4 weisen jeweils vorzugsweise mindestens zwei Noppen 6 zur Anbindung der Einfassung 2 auf, wobei diese mit Abstand zur kraftformschlüssigen Verbindung 3 zweier Stützringsegmente 4 angeordnet sind. Jedes Stützringsegment 4 wird so an drei Seiten von drei verschiedenen Bauteilen erfasst, wobei die Einfassung 2 eine Überbrückung der kraftformschlüssig verbundenen Stirnfläche 11 benachbarter Stützringsegmente 4 bildet.

Die Stützringsegmente 4 weisen dabei Fügestellen für die Anbindung der Einfassung 2 aus elastischem Werkstoff und die kraftschlüssige Verbindung 3 mit beidseitig benachbarten Stützringsegmenten 4 auf, die vorzugsweise gleichmäßig beabstandet Noppen 6 und Verbindungsnoppen 12 besitzen. Die Krafteinleitung zum Zusammenhalt der Stützringsegmente 4 ist dadurch besonders vorteilhaft.

Der Stützring 1 kann aus einem Stahl oder einem Kunststoff, insbesondere PTFE, bestehen. Der elastische Werkstoff kann ein Gummi oder ein synthetischer Kautschuk sein.

## Patentansprüche

1. Flachdichtung für eine Flanschverbindung für den Behälter- und Rohrleitungsbau, umfassend einen zur Aufnahme von Flanschkräften vorgesehenen Stützring (1) mit einer inneren und/oder äußeren Einfassung (2) aus einem elastischen Werkstoff als Dichtelement für einen Kraftnebenschluss in der Flanschverbindung und der Stützring (1) segmentiert ist, **dadurch gekennzeichnet, dass** Stützringsegmente (4) aneinandergereiht und durch stoßseitige, kraftformschlüssige Verbindungen (3) einen geschlossenen Stützring (1) bilden und die der Einfassung (2) zugewandten Kreisbogenflächen (5) der Stützringsegmente (4) radial vorstehende Noppen (6) für eine anhaftende Anbindung der entsprechende Ausschnitte (7) aufweisenden Einfassung (2) tragen, wobei die Einfassung (2) ein einstückig ausgebildeter Dichtring in kreisrunder Form ist, der ein gemeinsames Verbindungselement für alle Stützringsegmente (4) ist.

2. Flachdichtung nach Anspruch 1, **dadurch gekennzeichnet, dass** die kraftformschlüssige Verbindung (3) der Stützringsegmente (4) bündig mit der Ober- und Unterseite (10) des Stützrings (1) zusammensteckbar ist.

3. Flachdichtung nach einem der Ansprüche 1 oder 2, **dadurch gekennzeichnet, dass** die kraftformschlüssige Verbindung (3) der Stützringsegmente (4) zentrisch an Stirnflächen (11) der Stützringsegmente (4) ausgebildet ist.

4. Flachdichtung nach einem der Ansprüche 1 bis 3, **dadurch gekennzeichnet, dass** die Stützringsegmente (4) jeweils mindestens zwei Noppen (6) zur Anbindung der Einfassung (2) aufweisen, die mit Abstand zur kraftformschlüssigen Verbindung (3) zweier Stützringsegmente (4) angeordnet sind.

5. Flachdichtung nach einem der Ansprüche 1 bis 4, **dadurch gekennzeichnet, dass** die kraftformschlüssigen Verbindungen (3) der Stützringsegmente (4) jeweils über eine kugel-, knopf- oder pilzförmige Verbindungsnoppe (12) des einen der Fügepartner und einen entsprechenden Ausschnitt (13) mit Hinterschnitt des anderen Fügepartners erfolgen.

6. Flachdichtung nach Anspruch 5, **dadurch gekennzeichnet, dass** die Noppen (6) für die Anbindung der Einfassung (2) aus einem elastischen Werkstoff ausgebildet sind entsprechend der Verbindungsnoppen (12) der kraftschlüssigen Verbindung (3) der Stützringsegmente (4).

7. Flachdichtung nach einem der Ansprüche 1 bis 6, **dadurch gekennzeichnet, dass** die Stützringsegmente (4) Fügestellen für die Anbindung der Einfassung (2) aus elastischem Werkstoff und die kraftschlüssige Verbindung (3) aufweisen, die gleichmäßig beabstandet angeordnet sind.

8. Flachdichtung nach einem der Ansprüche 1 bis 7, **dadurch gekennzeichnet, dass** der Stützring (1) aus einem Stahl oder einem Kunststoff, insbesondere PTFE, besteht.

9. Flachdichtung nach einem der Ansprüche 1 bis 8, **dadurch gekennzeichnet, dass** der elastische Werkstoff der Einfassung (2) ein Gummi oder ein synthetischer Kautschuk ist.

## Claims

1. Flat gasket for a flange connection for tank and pipeline construction, comprising a supporting ring (1), which is provided for absorbing flange forces and has an inner and/or outer surround (2) made of an elastic material as a sealing element for secondary frictional locking in the flange connection and the supporting ring (1) is segmented, **characterized in that** supporting-ring segments (4) are provided in a juxtaposed arrangement and, by frictional-/form-fit connections (3) at the joints, form a closed supporting ring (1), and the circle-arc surfaces (5) of the supporting-ring segments (4), said surfaces being directed towards the surround (2), bear radially projecting protuberances (6) for an adhering attachment of the surround (2), which has corresponding cutouts (7), wherein the surround (2) is a single-piece sealing ring of circular shape, which is a common connecting element for all supporting-ring segments (4).

2. Flat gasket according to Claim 1, **characterized in that** the frictional-/form-fit connection (3) of the supporting-ring segments (4) can be plugged together flush with the upper side and underside (10) of the supporting ring (1).

3. Flat gasket according to either of Claims 1 and 2, **characterized in that** the frictional-/form-fit connection (3) of the supporting-ring segments (4) is formed centrally on end surfaces (11) of the supporting-ring segments (4).

4. Flat gasket according to one of Claims 1 to 3, **characterized in that** the supporting-ring segments (4) each have at least two protuberances (6), which are intended for attaching the surround (2) and are spaced apart from the frictional-/form-fit connection (3) of two supporting-ring segments (4).

5. Flat gasket according to one of Claims 1 to 4, **characterized in that** the frictional-/form-fit connections (3) of the supporting-ring segments (4) are made in each case via a ball-like, button-like or mushroom-like connecting protuberance (12) of one of the joining partners and a corresponding cutout (13) with undercut of the other joining partner.

6. Flat gasket according to Claim 5, **characterized in that** the protuberances (6) for attaching the surround (2) are formed from an elastic material, corresponding to the connecting protuberances (12) of the frictional-fit connection (3) of the supporting-ring segments (4).

7. Flat gasket according to one of Claims 1 to 6, **characterized in that** the supporting-ring segments (4) have joining locations which are intended for attachment of the surround (2) made of elastic material and for the frictional-fit connection (3) and are spaced apart uniformly.

8. Flat gasket according to one of Claims 1 to 7, **characterized in that** the supporting ring (1) consists of a steel or a plastics material, in particular PTFE.

9. Flat gasket according to one of Claims 1 to 8, **characterized in that** the elastic material of the surround (2) is a rubber or a synthetic rubber.

## Revendications

1. Joint plat pour un raccord à bride pour la construction de conteneurs et de conduites comprenant une bague d'appui (1) prévue pour absorber les efforts de bridage, pourvue d'un bord (2) intérieur et/ou extérieur en un matériau élastique et faisant office d'élément d'étanchéité pour une partie peu exposée aux forces dans le raccord à bride, et la bague d'appui étant segmentée, **caractérisé en ce que** les segments (4) de la bague d'appui sont juxtaposés et forment une bague d'appui fermée (1) par assemblage par friction et complémentarité de forme (3) et **en ce que** les surfaces arquées (5) tournées vers le bord (2) des segments (4) de la bague d'appui portent des bossages (6) radialement en saillie qui se connectent par adhérence au bord (2) présentant une découpe (7) correspondante, le bord (2) étant formé d'une bague d'étanchéité en une seule pièce de forme circulaire, qui forme un élément de liaison commun à tous les segments de la bague d'appui (4).

2. Joint plat selon la revendication 1, **caractérisé en ce que** l'assemblage par friction et complémentarité de forme (3) des segments de la bague d'appui (4) peut être emboité à fleur avec la surface (10) supérieure et inférieure de la bague d'appui (1).

3. Joint plat selon la revendication 1 ou 2, **caractérisé en ce que** l'assemblage par friction et complémentarité de forme (3) des segments de la bague d'appui (4) est formé centré sur des surfaces frontales (11) des segments de la bague d'appui (4).

4. Joint plat selon l'une quelconque des revendications 1 à 3 caractérisé en ce les segments de la bague d'appui (4) présentent chacun au moins deux bossages (6) pour la connexion du bord (2), et qui sont agencés de manière espacée pour l'assemblage par friction et complémentarité de forme (3) de deux segments (4) de la bague d'appui (4).

5. Joint plat selon l'une quelconque des revendications 1 à 4, **caractérisé en ce que** l'assemblage par friction et complémentarité de forme (3) des segments de la bague d'appui (4) est réalisé par enclipsage d'un bossage de connexion (12) respectivement en forme de sphère, de bouton ou de champignon d'un élément à assembler avec une découpe correspondante (13) de l'autre élément à assembler .

6. Joint plat selon la revendication 5, **caractérisé en ce que** les bossages (6) pour la connexion du bord (2) sont réalisés en un matériau élastique correspondant aux bossages de connexion (12) de l'assemblage par friction et complémentarité de forme (3) des segments de la bague d'appui (4).

7. Joint plat selon l'une quelconque des revendications 1 à 6, **caractérisé en ce que** les segments de la bague d'appui (4) présentent des emplacements d'assemblage régulièrement espacés pour la connexion du bord (2) en matériau élastique et pour l'assemblage par friction et complémentarité de forme (3).

8. Joint plat selon l'une quelconque des revendications 1 à 7, **caractérisé en ce que** la bague d'appui (1) est constituée d'un acier ou d'un matériau synthétique, en particulier de PTFE.

9. Joint plat selon l'une quelconque des revendications 1 à 8, **caractérisé en ce que** le matériau élastique du bord (2) est un caoutchouc un caoutchouc synthétique.
